# DEMANDE DE BREVET EUROPEEN

(11) **EP 4 091 457 A1**
(43) Date de publication de la demande: **23.11.2022**
(21) Numéro de dépôt: 22174719.9
(22) Date de dépôt: 20.05.2022
(51) Int. Cl.: A21D 8/04, A21C 1/00, A21C 1/14, A21C 13/00, C12M 1/34, G01F 23/00, C12M 1/36

(54) **FERMENTEUR ET PROCÉDÉ POUR PRODUIRE DU LEVAIN LIQUIDE**

(30) Priorité: 20.05.2021 BE 202105410
(71) Demandeur: JAC S.A., 4000 Liège (BE)
(72) Inventeur: VAN CAUWENBERGHE, Baudouin, 4000 Liège (BE)
(74) Mandataire: Callewaert, Koen

(57) **Abrégé**

Fermenteur et procédé pour produire du levain liquide, dans lequel on applique des étapes de repos séparées l'une de l'autre par une étape d'agitation et une étape de détermination de volume, dans lequel :
• l'étape d'agitation comprend : remuer le mélange (16),
• l'étape de détermination de volume comprend : déterminer le volume du mélange (16), ce volume formant un volume de départ, et
• une étape de repos comprend : soumettre le volume de départ (16) à une fermentation de sorte que le volume augmente.
L'étape de repos est terminée lorsque le volume du mélange (16) atteint une valeur seuil correspondant à un volume fermenté souhaité.

## Description

L'invention concerne un procédé pour produire du levain liquide à partir d'un mélange comprenant de l'eau et de la farine qui sont fournis dans une cuve. Ainsi, pour obtenir du levain liquide, on applique des étapes de fermentation successives séparées l'une de l'autre par une étape d'agitation et une étape de détermination de volume.

Lors d'une étape d'agitation, le mélange de levain liquide est remué pour homogénéiser ce mélange et lors d'une étape de détermination de volume, le volume du mélange dans la cuve est déterminé. Ce volume déterminé constitue un volume de départ. Dans une étape de repos on soumet le volume de départ du mélange à une fermentation, de sorte que le volume du levain liquide présent dans la cuve augmente.

Dans les fermenteurs à levain liquide de l'art antérieur, l'étape de repos est arrêté après l'écoulement d'un temps prédéfini et le levain est ensuite remué afin de faire descendre le niveau du levain. Après cette étape d'agitation, le mélange est à nouveau soumis à une étape de repos pour la durée prédéfinie. Cette séquence est répétée selon les prescriptions de la recette de préparation du levain liquide qui est utilisée.

Dans certains fermentateurs le mélange est agité en continu lors de la fermentation de ce mélange. Donc, il n'y a pas d'étapes séparées d'agitation et de fermentation pour la production du levain.

Or, pour une bonne fermentation du levain et pour obtenir un levain avec une bonne qualité aromatique, il est important de minimiser l'agitation du levain. Il s'avère que trop d'agitation affecte négativement le développement des arômes et des ferments. Néanmoins, il est important d'agiter le levain de temps en temps pour homogénéiser le mélange, pour repartir la chaleur dans le liquide et pour maintenir un bon développement des ferments. L'agitation du mélange libère également des bulles de gaz formées lors de la fermentation.

L'invention veut proposer un procédé pour optimaliser la production de levain liquide afin d'obtenir un levain d'une meilleure qualité avec une très bonne qualité aromatique. Par ailleurs, l'invention vise à proposer un procédé qui permet de préparer du levain de manière largement automatisée et ceci sans qu'il soit trop agité.

A cet effet, on détermine une valeur seuil pour le volume du mélange correspondant à un volume fermenté souhaité qui est déterminé en fonction dudit volume de départ déterminé lors de l'étape de détermination de volume. Cette valeur seuil est, éventuellement, basé sur une recette de préparation de levain connue par l'artisan. Selon l'invention l'étape de repos est terminée lorsque le volume du mélange a atteint ladite valeur seuil suite à la fermentation de ce mélange.

Avantageusement, l'étape de repos est terminée en démarrant ladite étape d'agitation.

De préférence, l'étape de détermination de volume est directement suivie par l'étape de repos.

Suivant une forme de réalisation intéressante du procédé, suivant l'invention, le volume de départ est multiplié par un facteur déterminé, par exemple, par ladite recette pour obtenir la valeur seuil. Ce facteur est, en particulier, comprise entre 1,05 et 3 et de préférence entre 1,15 et 1,85.

Suivant une forme de réalisation préférentielle du procédé, suivant l'invention, le volume du mélange, ou le changement du volume du mélange par rapport au volume de départ, est mesuré automatiquement lors de l'étape de repos.

De préférence, le volume ou ledit changement de volume du mélange est mesuré en continu.

Suivant une forme de réalisation particulière de l'invention, le volume du mélange, ou le changement de volume du mélange, est mesuré par un capteur de niveau sans contact qui est prévu au dessus de la surface du mélange présent dans la cuve.

Suivant une forme de réalisation intéressante du procédé, le volume du mélange est mesuré en déterminant la distance, ou le changement de distance, entre la surface du mélange et un niveau fixe au-dessus du mélange ou un niveau de départ du mélange.

De manière intéressante, le niveau du mélange est mesuré lorsque du levain liquide est soutirée de la cuve et le soutirage du levain liquide est terminé lorsqu'une valeur minimale prédéterminée du niveau du mélange est atteinte.

L'invention concerne également un fermenteur à levain comprenant une cuve pour contenir un mélange comprenant de l'eau et de la farine pour préparer du levain liquide. Ce fermenteur présente un agitateur qui permet de remuer le mélange dans la cuve et un capteur de niveau pour mesurer le volume ou le niveau du mélange. L'agitateur est entrainé par des moyens d'entrainement, par exemple, un moteur électrique.

Le fermenteur, suivant l'invention, est caractérisé en ce qu'il comprend un dispositif de contrôle adapté pour recevoir une valeur correspondant à un volume de départ du mélange. Ce dispositif de contrôle permet de déterminer une valeur seuil pour le volume du mélange à partir de ladite valeur du volume de départ. La valeur seuil correspond à un volume fermenté souhaité qui est déterminé en fonction dudit volume de départ du mélange. Le dispositif de contrôle est adapté pour coopérer avec le capteur de niveau afin d'entrainer l'agitateur lorsque le capteur de niveau détecte que le volume du mélange a atteint ladite valeur seuil lors de la fermentation du mélange.

De préférence, le dispositif de contrôle permet de mesurer la valeur correspondant au volume de départ par le capteur de niveau susdit.

Suivant une forme de réalisation intéressante du fermenteur, le capteur de niveau permet de mesurer la distance entre la surface du mélange et un niveau fixe en haut de la cuve.

D'autres détails et particularités de l'invention ressortiront de la description donnée ci-après, à titre d'exemple non limitatif, de quelques formes de réalisation particulières de l'invention avec référence aux dessins annexés.
La figure 1 est une coupe verticale schématique d'un fermenteur, suivant l'invention.
La figure 2 est une vue analogue à celle de la figure 1 avec le couvercle du fermenteur ouverte lors de la préparation d'un mélange pour préparer du levain liquide.
La figure 3 est une vue analogue à celle des figures 1 et 2 lorsque la cuve du fermenteur contient un volume de départ d'un mélange pour préparer du levain liquide.
La figure 4 est une vue analogue à celle des figures précédentes à la fin d'une étape de repos.

Dans les différentes figures, les mêmes chiffres de référence se rapportent aux mêmes éléments ou à des éléments analogues.

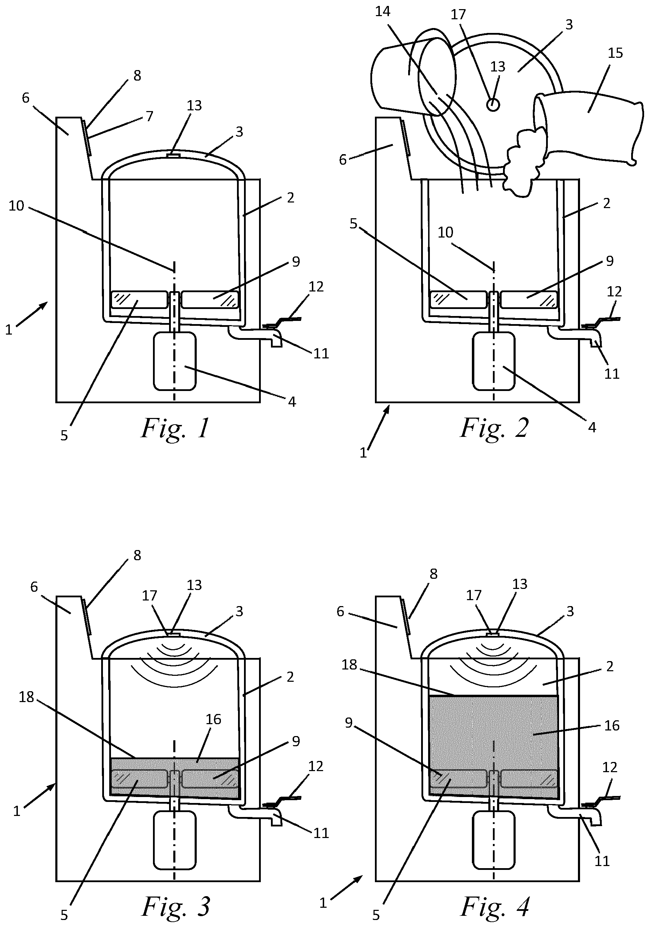

L'invention concerne, en générale, un procédé pour préparer du levain liquide de manière sensiblement automatisée et un fermenteur pour appliquer ce procédé. La figure 1 montre un tel fermenteur 1, suivant une forme de réalisation intéressante de l'invention, comprenant un châssis dans lequel sont prévus une cuve 2 avec un couvercle 3 et un moteur 4 pour entrainer un agitateur 5 présent dans la cuve 2. À sa partie supérieure le fermenteur 1 présente, généralement, un dispositif de contrôle 6 avec, par exemple, un écran 7 et des boutons de commande 8.

De préférence, la cuve 2 présente une section transversale circulaire et l'agitateur 5 comprend une ou plusieurs pales 9 qui peuvent être entrainées autour de l'axe centrale 10 de la cuve 2 pour remuer un liquide présent dans la cuve 2. Ainsi, les pales 9 sont entrainées par le moteur 4 qui est, par exemple, situé en dessous de la cuve 2.

Le fond de la cuve 2 est connecté à un tuyau 11 à travers lequel du liquide peut être prélevé de la cuve 2. Le tuyau 11 peut être fermé ou ouvert par un robinet 12 prévu à cet effet.

Suivant l'invention, le fermenteur 1 comprend un capteur de niveau pour mesurer le niveau d'un mélange présent dans la cuve 2. Dans la forme de réalisation de l'invention représentée dans les figures, ce capteur de niveau 13 est prévu dans le couvercle 3, en particulier, au milieu de celui-ci. Il est évident que ce capteur 13 peut être prévu à d'autres endroits dans le fermenteur 1. En général, le capteur de niveau 13 permet donc de déterminer le volume du mélange 16 présent dans la cuve.

Le levain liquide est préparé à partir d'un mélange comprenant de l'eau et de la farine. Comme le montre la figure 2, de l'eau 14 et de la farine 15 sont versés dans la cuve 2 du fermenteur 1 pour obtenir le mélange à partir duquel le levain est préparé. Eventuellement, des additifs supplémentaires peuvent être ajoutés à ce mélange selon les souhaits de l'opérateur pour modifier les arômes du levain.

Ensuite, l'agitateur 5 est actionné en entrainant les pales 9 autour de l'axe 10 par le moteur 4 pour mélanger et homogénéiser le contenu de la cuve 2. Lorsque le mélange 16 présent dans la cuve 2 est bien mélangé et homogène, l'agitateur 5 est arrêté ou sa vitesse d'entrainement est considérablement réduite.

Selon l'invention, une étape de détermination de volume est alors appliquée dans laquelle le volume du mélange 16 présent dans la cuve 2 est déterminé. Ceci est, de préférence, fait au moyen du capteur de niveau 13 sans contact qui est prévu au-dessus de la surface supérieure 18 du mélange 16 présent dans la cuve 2. Dans la forme de réalisation montrée dans les figures, ce capteur de niveau 13 comprend un capteur radar 17. Ainsi, ce capteur permet de déterminer le volume du mélange 16 présent dans la cuve 2 en mesurant la distance entre ce capteur 17 et la surface supérieure 18 du mélange 16. Donc le niveau de la surface supérieure du mélange étant mesuré, ce niveau formant ainsi un niveau de départ correspondant au volume de départ du mélange 16.

Ensuite, une valeur seuil est définie pour le volume du mélange 16, ou, en d'autres termes, pour le niveau de ce volume, correspondant au volume du mélange 16 qu'on souhait obtenir après une étape de repos.

Pour obtenir cette valeur seuil, le volume de départ est, généralement, multiplié par un facteur comprise entre 1,05 et 3. Ce facteur est normalement déterminé par la compétence de l'artisan ou par une recette pour la préparation du levain liquide. De préférence ce facteur est choisi entre 1,15 et 1,85. Dans des applications pratiques de l'invention, un facteur fixe peut éventuellement être programmé dans le dispositif de contrôle 6 du fermenteur 1.

Généralement, ladite cuve 2 présente une forme cylindrique avec une section horizontale circulaire constante. Ainsi, mesurer le niveau du mélange 16 dans la cuve 2 équivaut à la mesure du volume du mélange présent dans la cuve. Le niveau du mélange dans la cuve correspond sensiblement à la distance verticale entre le fond de la cuve 2 et la surface supérieure 18 du mélange 16 présent.

Après la détermination de la valeur seuil pour le volume du mélange 16 fermenté, le niveau de la surface supérieure 18 du mélange 16 est mesuré lors de la fermentation de celui-ci. Lors de cette fermentation, le volume du mélange 16 présent dans la cuve 2 augmente et donc le niveau du mélange 16 augmente. Le mesurage du niveau du mélange 16 peut être effectuée en continu ou en discontinu par le capteur de niveau 13. Lorsque le niveau du mélange 16 est mesuré en discontinue, le niveau est, par exemple, déterminé à des moments successifs.

Au moment où il est établi que le volume du mélange 16, ou donc le niveau de celui-ci, a atteint la valeur seuil suite à la fermentation de ce mélange, l'étape de repos est arrêtée.

Ceci est fait en commençant une étape d'agitation dans laquelle le mélange 16 fermenté est remué. En raison de cette agitation, le volume du mélange 16 diminue.

Cette étape d'agitation est suivie d'une nouvelle étape de détermination de volume comprenant la détermination du volume du mélange 16 dans la cuve 2, ce volume formant un nouveau volume de départ. Ensuite, une étape de repos successive est appliquée dans laquelle le mélange 16 est soumis à une fermentation pour que le volume du mélange 16 augmente à nouveau jusqu'à une valeur seuil qui est déterminée en fonction du nouveau volume de départ du mélange. Cette valeur seuil est obtenue par multiplier le nouveau volume de départ avec le facteur susdit.

Ainsi, dans le procédé pour produire du levain liquide à partir du mélange de l'eau 14 et de la farine 15, on applique des étapes de repos successives séparées l'une de l'autre par une étape d'agitation et une étape de détermination de volume, jusqu'à l'obtention d'un levain liquide qui peut être utilisé dans la préparation de produits de viennoiserie et de boulangerie, comme le pain.

Donc, chaque étape de repos est, de préférence, précédée par une étape d'agitation et une étape de détermination de volume.

Il est également possible que le volume initiale du mélange 16 est défini par les quantités d'eau 14, de farine 15 et éventuellement d'additifs mis dans la cuve 2 pour former le mélange 16, en particulier par les quantités prescrites par une recette de préparation de levain. Par conséquent, il est possible d'introduire ce volume de départ dans le dispositif de contrôle 6 avant d'entamer une première étape de repos ou lors de cette étape de repos. Ceci peut être fait manuellement en introduisant la valeur du volume ou au moyen d'une recette de levain préprogrammée qu'on choisit dans le dispositif de contrôle 6. Ainsi, dans un tel cas, il n'est pas nécessaire de mesurer le volume de départ avec le capteur de niveau 13, en particulier avant la première étape de repos.

Lors de l'étape de repos, le mélange n'est généralement pas remué, mais dans certains cas ou pour certaines recettes de préparation de levain liquide, il peut être intéressant de remuer le mélange légèrement lors de l'étape de repos. Ainsi, lors de l'étape de repos, le mélange est agité avec une intensité qui est inférieure à l'intensité d'agitation lors de l'étape d'agitation. Donc, par remuer le mélange lors de l'étape d'agitation, il est entendu que le mélange est agité avec une intensité supérieure à l'intensité de l'agitation lors de l'étape de repos.

Généralement, lorsque le mélange est agité lors de l'étape de repos ceci est effectué avec une intensité qui est inférieure d'au moins un facteur 1,5, et de préférence d'au moins un facteur 4 ou 5, à l'intensité d'agitation lors de l'étape d'agitation.

L'intensité d'agitation est déterminée par la vitesse de l'entrainement de l'agitateur 5 et est, en particulier, proportionnelle à cette vitesse. Donc lorsque la vitesse d'entrainement de l'agitateur 5, en particulier de la pale 9, autour de l'axe central 10, augmente, l'intensité d'agitation augmente également.

Lorsque la production de levain liquide est terminée, la cuve 2 peut éventuellement être refroidie pour bloquer la fermentation du mélange pour stocker le levain.

Le levain liquide peut être soutirée de la cuve 2 à travers le tuyau 11 en ouvrant le robinet 12 jusqu'à ce que la quantité désirée soit obtenue.

Il est important de maintenir une quantité minimale de levain liquide dans la cuve 2. Cette quantité minimale peut servir de mélange de base pour la production de levain dans un procédé de production ultérieur. Ainsi, le niveau du mélange 16 présent dans la cuve 2 est mesuré lorsque du levain liquide est soutirée de la cuve. Ceci est, par exemple, fait par le capteur de niveau 13. Lorsqu'une valeur minimale prédéterminée du niveau du mélange 16 est atteinte dans la cuve 2, le robinet 12 est fermé automatiquement ou une alarme est déclenchée pour indiquer que le soutirage du levain liquide doit être terminé.

La quantité minimale de levain qui est conservé dans la cuve 2 est choisie, par exemple, en fonction du volume de levain qu'on veut produire ultérieurement dans le fermenteur 1. De la farine et de l'eau sont ajoutés au levain restant dans la cuve pour obtenir un nouveau mélange pour la production de levain liquide dans le fermenteur 1 suivant le procédé de l'invention décrit ci-dessus.

Donc le niveau minimale de la quantité de levain liquide à conserver dans la cuve 2 est ajustable par l'opérateur et peut, par exemple, être introduit manuellement dans le dispositif de contrôle 6 afin de déclencher une alarme lorsque ce niveau prédéterminé est atteint par le volume du mélange et détecté par le capteur de niveau 13.

Le fermenteur 1 peut également comprendre un capteur de contact prévu dans la paroi de la cuve 2 à un niveau qui correspond à un volume minimal de levain qui doit être conservé pour assurer le bon fonctionnement du fermenteur 1 lors de production subséquente de levain.

De manière analogue, un capteur de contact, en particulier un capteur de débordement, est éventuellement prévu dans la partie supérieure de la paroi de la cuve 2. Lorsque le niveau du mélange atteint ce capteur, une alarme est déclenchée ou une étape d'agitation est entamée pour empêcher que le liquide déborde la cuve 2. Il va de soi que, alternativement, le capteur de niveau sans contact 13 peut également être utilisé comme capteur de débordement.

La présence du capteur de niveau 13 permet de mesurer la vitesse de montée de la surface du mélange 16 lors de l'étape de repos. Lorsque cette vitesse dépasse une valeur seuil prédéterminée, ladite étape de repos est terminée par le démarrage d'une étape d'agitation.

Le capteur de niveau 13 détermine le volume du mélange 16 en mesurant la distance entre la surface supérieure 18 du mélange 16 et une référence, en particulier un niveau fixe au-dessus du mélange 16. Ce niveau fixe correspond, par exemple, à la position du capteur 13. Ce capteur de niveau 13 peut être formé par n'importe quel capteur qui permet de mesurer le niveau du mélange ou, en général, de déterminer le volume du mélange, comme par exemple un capteur radar 17, un capteur optique, un capteur ultrason, etc. De préférence le capteur 13 est un capteur non-contact qui est prévu à une distance du mélange et au-dessus de celui-ci. Ce capteur permet de mesurer le niveau du mélange par rapport à ledit niveau fixe ou par rapport au niveau de départ du mélange. Ainsi, il est possible de mesurer le niveau du volume du mélange par rapport à ce niveau fixe ou un changement du niveau du mélange par rapport au niveau de départ de celui-ci.

Le fermenteur à levain, suivant l'invention, se caractérise par la présence du dispositif de contrôle 6 qui permet de recevoir une valeur correspondant au niveau de départ du mélange 13.

Ainsi, cette valeur peut être introduit dans le dispositif de contrôle 6 par l'opérateur après que celui-ci a préparé le mélange de départ. A cet effet, le dispositif de contrôle présent un moyen d'entrée, comme par exemple un écran tactile 7 ou des boutons de commande 8, pour entrer ladite valeur de départ dans le dispositif de contrôle 6. Il est également possible que l'opérateur introduit directement la valeur seuil pour le volume du mélange, ou le niveau de celui-ci, qu'on souhaite obtenir à la fin de l'étape de repos.

Mais, de préférence cette valeur du niveau ou du volume de départ du mélange 16, provenant du capteur de niveau 13, est saisie automatiquement par le dispositif de contrôle 6 suite au coopération entre le capteur 13 et le dispositif de contrôle 6. A partir de cette valeur provenant du capteur 13, une valeur seuil est alors générée par le dispositif de contrôle 6 qui correspond au volume fermenté souhaité, ou au niveau de ce volume souhaité, comme décrit plus haut.

Le dispositif de contrôle 6 coopère alors avec le capteur 13 pour mesurer le niveau ou le volume du mélange lors de l'étape de repos et pour comparer ladite valeur seuil avec la mesure du niveau par le capteur 13. Lorsque qu'il est établi que cette valeur seuil est atteint, le dispositif de contrôle 6 déclenche l'entrainement de l'agitateur 5 afin de terminer l'étape de repos et de démarrer l'étape d'agitation.

Le dispositif de contrôle 6 est également capable de stocker une valeur minimale pour le niveau du mélange 16 dans la cuve 2. Lorsque cette valeur minimale est atteinte par le mélange 16 comme déterminé au moyens du capteur de niveau 13, le dispositif de contrôle génère une alarme ou déclenche la fermeture automatique d'une vanne d'évacuation 12 par laquelle la cuve 2 peut être vidée.

Il est bien entendu que l'invention n'est pas limitée aux différentes formes de réalisation décrites ci-dessus, mais que d'autres variantes encore peuvent être envisagées sans sortir du cadre de la présente invention, notamment en ce qui concerne la forme de la cuve 2 et la présence et la position de capteurs. Il est, par exemple, possible que autour de la cuve, des moyens de refroidissement ou de réchauffement sont prévus qui coopèrent avec des capteurs thermiques. Le dispositif de contrôle 6 peut, par exemple, comprendre des moyens pour introduire ou pour activer de cycles préprogrammés d'une succession d'étapes d'agitation, de détermination de volume et de repos.

Il est également possible que la détermination du volume du mélange est faite lors de l'étape d'agitation, par exemple, à la fin de cette étape d'agitation. Ainsi, l'étape de détermination de volume peut être effectuée lors de l'étape d'agitation ou lors d'une interruption de l'étape d'agitation.

Il va de soi qu'il n'est pas nécessaire que l'agitateur 5 est entrainé autour d'un axe centrale 10 de la cuve 2. L'agitateur 5 peut, par exemple, comprendre plusieurs pales 9 qui sont entrainées autour d'axes différents.

## Revendications

1. Procédé pour produire du levain liquide à partir d'un mélange (16) comprenant de l'eau (14) et de la farine (15) qui sont fournis dans une cuve (2), dans lequel on applique une étape de repos ou plusieurs étapes de repos successives séparées l'une de l'autre par une étape d'agitation et dans lequel on applique une étape de détermination de volume avant chaque étape de repos, dans lequel :
• l'étape d'agitation comprend : remuer le mélange (16) pour l'homogénéiser,
• l'étape de détermination de volume comprend : mesurer le volume du mélange (16) dans la cuve (2), ce volume formant un volume de départ, et
• une étape de repos comprend : soumettre le volume de départ du mélange (16) à une fermentation de sorte que le volume du mélange (16) présent dans la cuve (2) augmente,
lors de l'étape de repos le mélange n'étant pas remué ou le mélange étant agité avec une intensité qui est inférieure à l'intensité d'agitation lors de l'étape d'agitation,
**caractérisé en ce qu'on** termine l'étape de repos lorsque le volume du mélange (16) a atteint une valeur seuil suite à la fermentation de ce mélange (16), cette valeur seuil correspondant à un volume fermenté souhaité qui est déterminé en fonction dudit volume de départ déterminé lors de l'étape de détermination de volume et à partir duquel l'étape de repos est entamée.

2. Procédé suivant la revendication 1, dans lequel on termine l'étape de repos en démarrant ladite étape d'agitation.

3. Procédé suivant la revendication 1 ou 2, dans lequel ladite valeur seuil est obtenue par la multiplication de la valeur du volume de départ par un facteur comprise entre 1,05 et 3 et de préférence entre 1,15 et 1,85.

4. Procédé suivant l'une quelconque des revendications 1 à 3, dans lequel le volume du mélange (16), ou un changement de volume du mélange (16), est mesuré par un capteur de niveau (13) sans contact qui est prévu au dessus de la surface (18) du mélange (16) présent dans la cuve (2).

5. Procédé suivant la revendication 4, dans lequel le capteur de niveau (13) sans contact comprend un capteur radar (17).

6. Procédé suivant l'une quelconque des revendications 1 à 5, dans lequel on mesure la vitesse de montée de la surface (18) du mélange (16) lors de l'étape de repos et, lorsque cette vitesse dépasse une valeur seuil prédéterminée, on termine l'étape de repos par le démarrage d'une étape d'agitation.

7. Procédé suivant l'une quelconque des revendications 1 à 6, dans lequel le volume du mélange (16) est déterminé en mesurant le niveau du mélange (16), en particulier le niveau de la surface supérieure (18) de celui-ci.

8. Procédé suivant l'une quelconque des revendications 1 à 7, dans lequel le mélange est agité lors de l'étape de repos avec une intensité qui est inférieure d'au moins un facteur 1,5, et de préférence d'au moins un facteur 4 ou 5, à l'intensité d'agitation lors de l'étape d'agitation.

9. Fermenteur à levain comprenant une cuve (2) pour contenir un mélange comprenant de l'eau et de la farine pour préparer du levain liquide, le fermenteur (1) comprenant un agitateur (5) permettant de remuer le mélange présent dans la cuve (2) et au moins un capteur de niveau (13) pour mesurer le niveau du mélange dans la cuve (2), ledit agitateur (5) étant entrainé par des moyens d'entrainement, **caractérisé en ce que** le fermenteur (1) comprend un dispositif de contrôle permettant de recevoir une valeur correspondant à un volume de départ du mélange pour déterminer une valeur seuil pour le volume du mélange, cette valeur seuil correspondant à un volume fermenté souhaité qui est déterminé en fonction dudit volume de départ, le dispositif de contrôle (6) coopérant avec le capteur de niveau (13) afin d'entrainer l'agitateur (5) lorsque ce capteur de niveau (13) détecte que le volume du mélange (16) a atteint ladite valeur seuil lors de la fermentation du mélange (16).

10. Fermenteur suivant la revendication 9, dans lequel ladite valeur correspondant au volume de départ est mesurée par le capteur de niveau (13).

11. Fermenteur suivant la revendication 9 ou 10, comprenant un moyen d'entrée (7,8) pour entrer ladite valeur correspondant au volume de départ dans le dispositif de contrôle (6).

12. Fermenteur suivant l'une quelconque des revendications 9 à 11, dans lequel le capteur de niveau (13) comprend un capteur de niveau sans contact, comme par exemple un capteur radar (17), un capteur ultrason ou un capteur optique.

13. Fermenteur suivant l'une quelconque des revendications 9 à 12, dans lequel le capteur de niveau (13) permet de mesurer la distance entre la surface (18) du mélange (16) et un niveau fixe en haut de la cuve (2).

14. Fermenteur suivant l'une quelconque des revendications 9 à 13, dans lequel le dispositif de contrôle (6) est prévu pour stocker une valeur minimale pour le niveau ou le volume du mélange (16) dans la cuve (2) et, lorsque le capteur de niveau (13) détermine que ladite valeur minimale est atteinte par le mélange (16), pour générer une alarme ou pour fermer automatiquement une vanne d'évacuation (12) permettant de vider la cuve (2).

15. Fermenteur suivant l'une quelconque des revendications 9 à 14, dans lequel le dispositif de contrôle (6) coopère avec l'agitateur (5) susdit pour entrainer l'agitateur, lorsque le capteur de niveau (13) détecte que le volume du mélange (16) a atteint ladite valeur seuil, avec une vitesse qui est supérieure à la vitesse d'entrainement lorsque le niveau du mélange détecté par le capteur (13) est inférieur à cette valeur seuil lors de la fermentation du mélange (16).
